Europäisches Patentamt

European Patent Office

Office européen des brevets

(11) Publication number: **0 021 657**
**B1**

(12) **EUROPEAN PATENT SPECIFICATION**

(45) Date of publication of patent specification: **22.08.84**

(51) Int. Cl.³: **B 62 K 11/04**

(21) Application number: **80301873.8**

(22) Date of filing: **05.06.80**

(54) **Motor cycles.**

(30) Priority: **06.06.79 JP 70784/79**
**06.06.79 JP 70785/79**

(43) Date of publication of application:
**07.01.81 Bulletin 81/01**

(45) Publication of the grant of the patent:
**22.08.84 Bulletin 84/34**

(84) Designated Contracting States:
**DE FR GB**

(56) References cited:
**DE-A-2 726 244**
**DE-B-1 259 727**
**FR-A-2 320 856**
**US-A-4 010 812**

(73) Proprietor: **HONDA GIKEN KOGYO KABUSHIKI
KAISHA**
**27-8, Jingumae, 6-chome**
**Shibuya-ku, Tokyo 150 (JP)**

(72) Inventor: **Noda, Azusa**
**74-2 Higashiooizumi-cho**
**Nerima-ku, Tokyo (JP)**
Inventor: **Kamiya, Tadashi**
**1-2-6, Kitano**
**Niiza-shi, Saitama-ken (JP)**

(74) Representative: **MacFarlane, John Anthony
Christopher et al**
**HASELTINE LAKE & CO. Hazlitt House 28,**
**Southampton Buildings Chancery Lane**
**London WC2A 1AT (GB)**

Courier Press, Leamington Spa, England.

## Description

This invention relates generally to motorcycles and more particularly to two wheeled motorcycles including a radiator or a like heat-dissipating device for cooling the propelling power unit. If the heat-dissipating device is located at the front of the power unit, any increase in air passage area of the heat-dissipating device, intended to improve the cooling capacity of the device, must result in a substantial increase in air resistance of the vehicle. This makes it difficult to employ any large-sized heat-dissipating device.

In United States Patent No. 4010812 there is disclosed a two wheeled motorcycle in which a rearwheel drive power unit, located between the front and rear road wheels, is covered by a cowling structure that is formed at the front with an air inlet opening. An air outlet opening downstream of this air inlet opening has a power-unit cooling device fitted therein. The cowling structure is of thin sheet material, thereby to achieve weight-reduction of the vehicle, but there is the problem that the use of such material results in reduction in rigidity of the cowling structure, rendering the latter liable to vibrate under wind pressure during vehicle travel, and this makes it necessary to provide and cowling structure with reinforcing members such as a bulkhead which in the arrangement of U.S. Patent No. 4010812, is attached to the cowling structure and in which, in U.S. 4010812, the outlet opening is provided and the cooling device is fitted. However, use of such members should be avoided as far as possible to minimize the resulting increase in vehicle weight.

According to the present invention there is provided a two wheeled motorcycle comprising a rearwheel drive power unit located between the front and rear road wheels of the motorcycle and a cowling structure, for the power unit, that is of thin sheet material and that is formed at the front with an air inlet opening, there being an air outlet opening downstream of the inlet opening; characterised in that the air outlet opening is in one side of the cowling structure, and in that a power-unit cooling device is fitted to the cowling structure in the air outlet opening. In this way there is provided a two wheeled motorcycle having a large capacity power-unit cooling device with an air passage area widely extended, without involving any increase in air resistance of the vehicle during travel, and having a lightweight and highly rigid form of cowling structure capable of introducing a large volume of air to the power-unit cooling device with particular efficiency.

For a better understanding of the invention and to show how the same may be carried into effect, reference will now be made, by way of example, to the accompanying drawings, in which:—

Figure 1 is a general side view of a two wheeled motorcycle;

Figure 2 is a front view, partially broken away, of the motorcycle of Figure 1;

Figure 3 is a side view in longitudinal cross section, of a cowling structure of the motorcycle of Figures 1 and 2;

Figures 4, 5 and 6 are cross-sectional views, on a larger scale, taken along lines IV—IV, V—V and VI—VI, respectively, in Figure 1; and

Figure 7 is a side view of a power unit and rear fork assembly of the motorcycle of Figures 1 and 2.

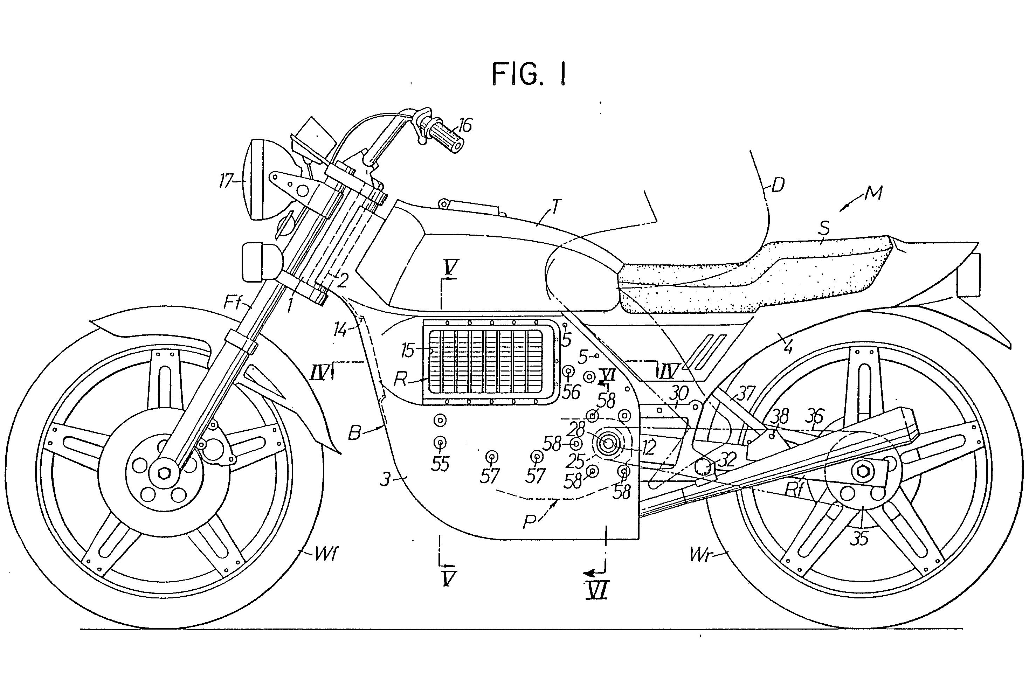

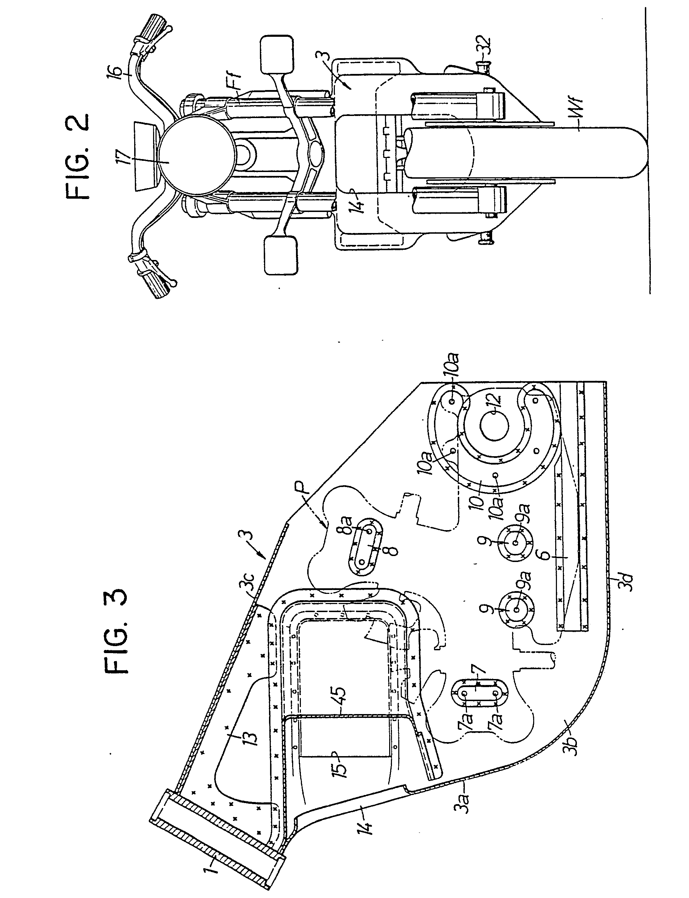

Referring first to Figures 1 and 2, the two wheeled motorcycle M has a vehicle frame B having a head tube 1 disposed at the front end thereof, a front fork $F_f$ mounted in the head tube 1 through the intermediary of a steering shaft 2 and supporting a front road wheel $W_f$, a power unit P accommodated in the vehicle frame B, and a rear fork $R_f$ pivotally connected at its front end to the power unit P and rotatably supporting at the free end remote from the power unit a rear road wheel $W_r$.

The vehicle frame B consists of a cowling structure 3 of thin sheet material firmly secured at the front end to the head tube and extending rearwardly downward therefrom, and a seat stay 4, of channel cross-section, detachably connected to the rear end of the cowling structure 3 by screws 5 and covering the top portion of the rear wheel $W_r$. As shown in Figure 3, the cowling structure 3 includes a front section 3a, lateral sections 3b, a top section 3c and a bottom section 3d and, as a whole, takes the form of a streamlined shell structure opening rearwardly. An air inlet opening 14 is formed in the front section 3a of the cowling structure 3 and a pair of air outlet openings 15 are formed in the respective lateral sections 3b in opposing relation to each other.

Provided in the cowling structure 3 in fixed relation thereto is an air-flow dividing partition or guide plate 45 which defines within the cowling structure 3 a bifurcated air passage duct which serves, during vehicle travel, to divide the flow of air entering the cowling structure 3 through the air inlet opening 14 into two separate streams smoothly directed to the lateral air outlet openings 15 on the opposite sides of the cowling structure 3. The air-flow dividing guide plate 45 also serves to increase the rigidity of the cowling structure 3 by interconnecting the opposite lateral sections 3b.

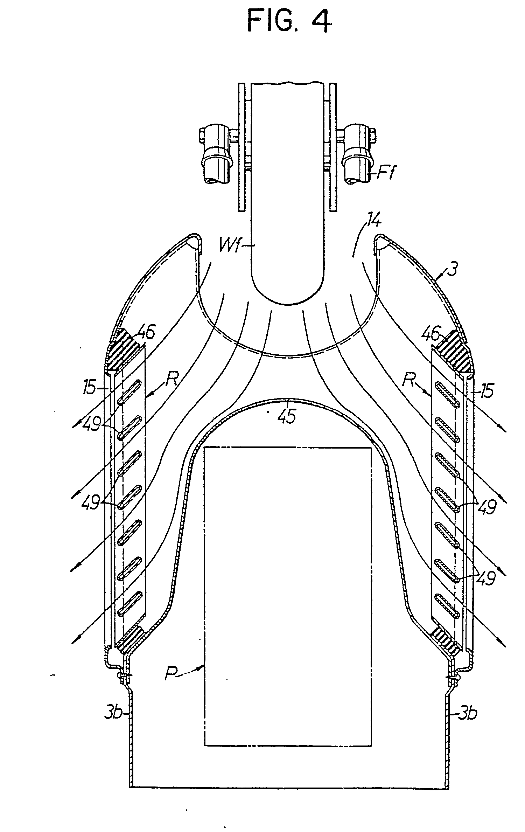

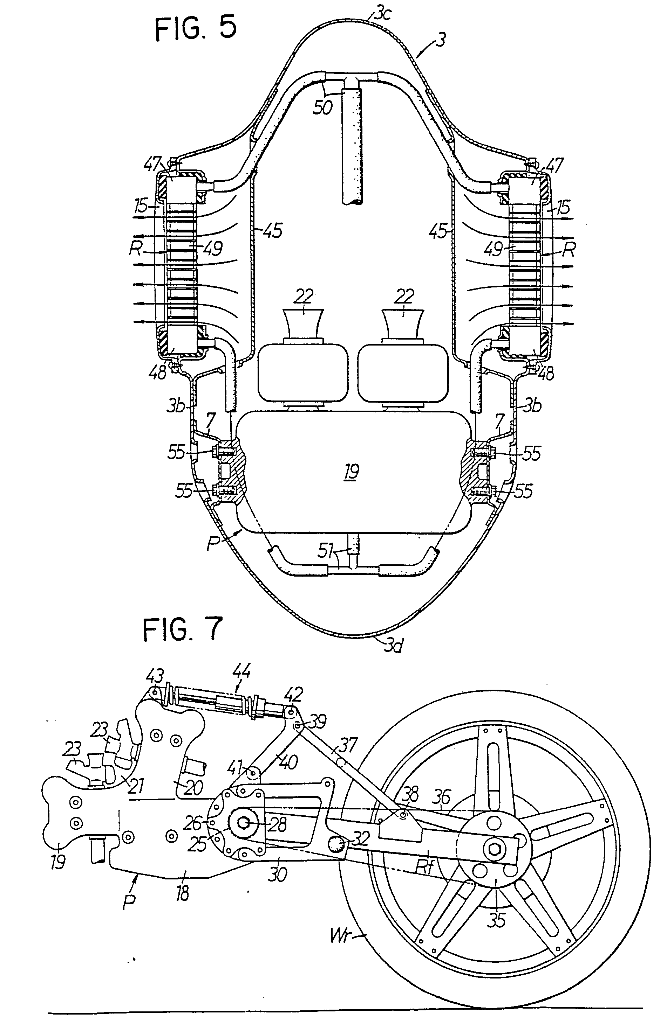

As clearly seen in Figures 4 and 5, radiators R, which constitute the power-unit cooling device, are fitted one in each of the air outlet openings 15 through the medium of respective elastic members 46. Each radiator R consists of top and bottom water tanks 47 and 48 with a plurality of flattened water tubes 49 extending therebetween. As clearly seen in Figure 4, the opposite flat side surfaces of the water tubes 49 of each radiator extend parallel to a vertical plane inclined outwardly rearward of the vehicle. The top water tanks 47 of the two radiators R are connected to a coolant outlet port of the power unit P by conduits 50, the bottom water tanks 48 being connected to a coolant inlet port of the power unit P by conduit means 51.

During travel of the vehicle, large air streams pass through the cowling structure 3, flowing in the direction from the air inlet opening 14 to the air outlet openings 15, as indicated by arrowed lines in Figure 4, under the combined effect of ram pressure acting in the air inlet opening 14 and suction acting in the air outlet openings 15, and also under the guide effect of the air-flow dividing guide plate 45. Such air streams, flowing around the flattened water pipes 49 of the radiators R, serve effectively to cool the water pipes. The water pipes 49, being inclined as described above, cause no substantial hindrance to the streams of cooling air. The flows of coolant water as cooled in the two radiators R leave the respective bottom water tanks 48 and join together in the conduits 51 to enter the power unit P. The combined flow of coolant water, having served to cool the power unit, is divided in the conduits 50 into two separate flows to return to the top water tanks 47 of the two radiators R.

Further, as clearly seen in Figure 3, there are provided on the inside surfaces of the lateral sections 3b of the cowling structure 3 guide rails 6 which extend horizontally in a front to rear direction, and reinforcing and power-unit supporting bosses 7 to 10. The guide rails 6 and bosses 7 to 10 are firmly secured to the adjacent lateral sections of the cowling structure 3, as by welding, in face-to-face relation to the sides of the power unit P. The rearmost bosses 10 are shaped in a circular arc, that is they are C-shaped, and are axially aligned with the output shaft 11 of the power unit P. Also, the bosses 7 to 10 are formed with respective bolt holes 7a to 10a at appropriate locations, as shown, and the C-shaped bosses 10 are also formed each with a central aperture 12 to permit tool insertion.

The cowling structure 3 is formed in one piece, or in an appropriately divided form, of a lightweight material such as light alloy or synthetic resin and has practically no effective strength in itself. Reference numeral 13 indicates a reinforcement member bonded to the inside surface of the top portion of the cowling structure 3 to reinforce the structure around its connection with the head tube 1.

Provided on top of the cowling structure 3 is a fuel tank T in straddling relation thereto. Mounted on the seat stay 4, which extends rearwardly from the tank T, is a seat for the rider D to sit thereon in a straddling fashion.

The front fork $F_f$ is of telescopic construction with steering handlebars 16 and a headlight 17 fitted, respectively, to the top end and to the front face thereof.

As best seen in Figure 7, the power unit P includes a crankcase 18 and two multiple-barrel cylinder blocks 19 and 20 projecting from the front portion of the crankcase 18 in angular relation to each other. Located in the V slot or angular space 21 defined between the cylinder blocks 19 and 20 are two carburetors 22 and 23 associated with the respective cylinder blocks 19 and 20.

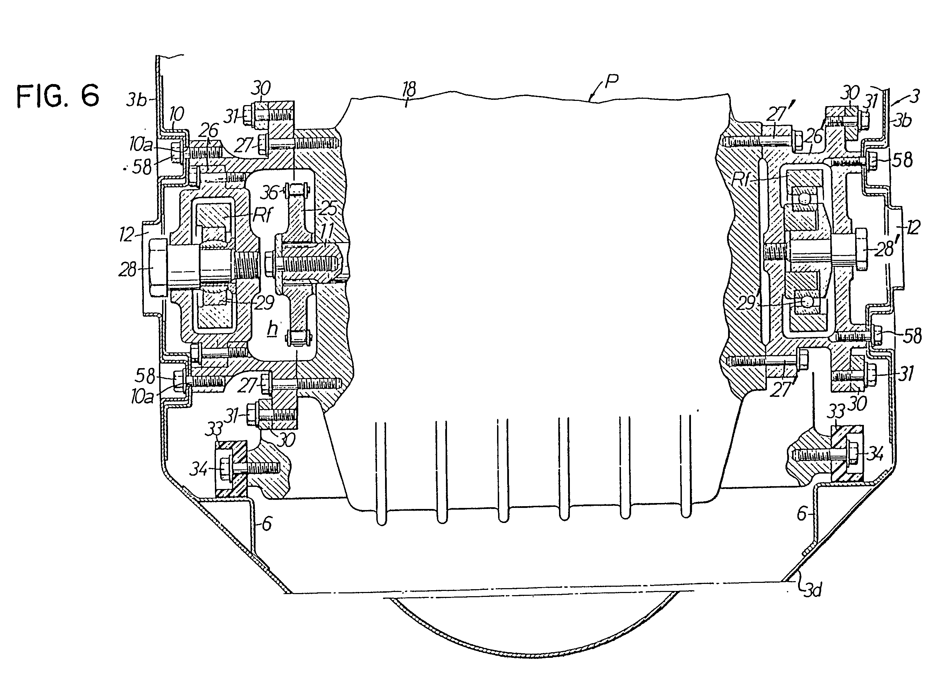

As shown in Figure 6, a driving sprocket wheel 25 is fixedly mounted on the output shaft 11 of the power unit P, which extends exteriorly of the crankcase 18 through one side wall thereof. The sprocket wheel 25 is in a housing space h defined by an adapter 26 which is fixed to the side of the crankcase 18 by bolts 27. A further adapter 26' is fixed to the opposite side of the crankcase 18 by bolts 27' in a position opposed to the adapter 26. Pivot shafts 28 and 28', arranged axially in alignment with the output shaft 11, are removably threaded in the respective adapters 26 and 26'. The rear fork $R_f$ is pivotally mounted at its front basal ends on the pivot shafts 28 and 28' through the intermediary of respective bearings 29 and 29'.

Parallel brackets 30 are firmly secured to the respective adapters 26 and 26' by bolts 31 and each has a bar-like foot rest 32 secured thereto, as seen in Figures 1 and 7.

As shown in Figure 6, there are provided on the sides of the crankcase 18 slide members 33 of synthetic resin material which are secured to the crankcase by bolts 34 and are slidable over the respective guide rails 6 on the inside of the cowling structure 3.

The rear road wheel $W_r$, rotatably supported on the rear fork $R_f$ at the rear end thereof, has a driven sprocket wheel 35 secured coaxially thereto. A drive chain 36 is trained under tension between the driving and driven sprocket wheels 25 and 35, as shown. With this arrangement, the output of the power unit P is transmitted from the output shaft 11 through the driving sprocket 25 and chain 36 to the driven sprocket 35 to drive the rear wheel $W_r$.

In order to prevent any excessive strain occurring in the area of pivotal connection of the rear fork $R_f$, even with more or less deformation of the left leg of the rear fork under the tension of the drive chain 36, the bearing 29 on the pivot shaft 28, which lies adjacent the output shaft 11 of the power unit P, is in the form of a spherical bearing, as illustrated, so that smooth up and down rocking movement of the rear fork $R_f$ is ensured.

Further, since the output shaft 11 and the pivot shafts 28 and 28' are in axial alignment with each other, as described above, the distance between the driving and driven sprockets 25 and 35 and hence the tension of the drive chain 36 remain unchanged at all times irrespective of the vertical position of the rear fork $R_f$ in its rocking movement.

As shown in Figure 7, a strut link 37, which is of bifurcated form, is pivotally supported, at 38, at its separated rear ends on the respective legs of the rear fork $R_f$ midway thereof in straddling relation to the rear wheel $W_r$ for free vertical rocking movement. Provided in front of the strut link 37 is a rocker link 40 which is pivotally supported at one end on the top of the crankcase 18 for fore and aft rocking movement. The strut and rocker links 37 and 40 are pivotally connected with each other, at 39, at their ends remote from the pivot connections to the rear fork and the crankcase. Interposed between the rocker link 40 and one of the cylinder blocks, 20, is a single shock absorber unit 44 fitted with a suspension spring, which unit is pivotally connected at its opposite ends to the rocker link 40 and cylinder block 20, as indicated at 42 and 43. Alternatively the shock absorber unit 44 may be connected at its fixed end, that is, at its front end to the rear end of the top of the cowling structure 3, if desired.

Vertical rocking movement of the rear fork $R_f$ causes fore and aft rocking movement of the rocker link 40 through the intermediary of the strut link 37 thereby to cause the suspension spring and shock absorber unit 44 to expand and contract. It will be noted, therefore, that the single suspension spring and shock absorber unit 44 serves not only to support the rear fork $R_f$ but also serves as an effective cushioning unit for the rear fork $R_f$ in its vertical rocking movement during vehicle travel.

In assembling the two-wheeled motorcycle M, the cowling structure 3 and power unit P are connected together in the following manner.

First, the power unit P is inserted into the cowling structure 3 from behind the latter by placing the slide members 33 in sliding engagement with the respective guide rails 6 until it is set in a predetermined position in the cowling structure. Subsequently, the bosses 7 to 10 on the lateral sections 3b of the cowling structure 3 are firmly fixed to the power unit P by means of fastening bolts 55 to 58, which are inserted into respective bolt holes 7a to 10a from outside the cowling structure 3. The C-shaped bosses 10 are clamped against the respective adapters 26 and 26' on the opposite sides of the power unit P with the result that the lateral sections 3b of the cowling structure 3 are firmly secured to the power unit P particularly around the pivot shafts 28 and 28' on which the rear fork $R_f$ is mounted. In this, manner, the power unit P serves solidly to interconnect the lateral sections 3b of the cowling structure 3, thus acting as a reinforcing or stiffening member effective to impart a practical strength to the cowling structure 3.

In the normal position of the rider D during vehicle travel, in which his feet are placed on the footrests 32 with the fuel tank T held between his knees, as seen in Figure 1, his legs are both held concealed behind the cowling structure 3 and this, together with the streamlined configuration of the structure 3, makes the air resistance of the vehicle during travel extremely small.

In the state of the power unit P connected with the cowling structure 3, when it is desired to separate the rear fork $R_f$ from the power unit P for maintenance work such as renewal of the drive chain 36, it is only required that an appropriate tool is inserted through the tool apertures 12 into the cowling structure 3 in order to draw the pivot shafts 28 and 28' out of the respective bearings 29 and 29' thereby to disconnect the rear fork $R_f$ from the adapters 26 and 26'. There is no need to remove the power unit P from the cowling structure 3 once it has been connected to it. This enables maintenance operations to be performed with particular ease and efficiency.

To summarize, the rearwheel driving power unit located between the front and rear road wheels is housed in a cowling structure formed of thin sheet material which is formed at its front with an air inlet opening and at at least one of its sides with an air outlet opening, and a heat-dissipating device such as a radiator for cooling the power unit is fitted in the air outlet opening. This means that the power unit can be fitted with a large-capacity cooling device having a side air passage area without increasing the front area, i.e. the area of forward projection, of the power unit and cowling assembly to any extent and permits a marked reduction in air resistance of the vehicle under the flow-straightening effect of the cowling structure. Moreover, the cooling system can be supplied with an ample volume of cooling air under the combined effect of ram pressure and suction in the air inlet and outlet openings so that the cooling capacity of the system is largely increased.

Specifically, the cowling structure formed in its lateral sections with air outlet openings to receive a pair of cooling units not only enables realization of a cooling system further increased in capacity as a whole assisting in reducing the air resistance of the vehicle but is also highly effective to improve the stability of the vehicle during travel due to the fact that the vehicle is well balanced in weight laterally thereof with the arrangement of the paired cooling unit.

Furthermore, the lateral sections of the cowling structure are interconnected by an airflow dividing guide plate which defines a bifurcated air passage duct in the cowling structure between the air inlet and outlet openings and in which duct the cooling components such as radiators are installed. As will readily be noted, the guide plate also serves to reinforce the cowling structure, eliminating or reducing the need for employing any extra reinforcing members. In this manner, the cowling structure is substantially increased in rigidity, in spite of its light-weight, so as to be free from any vibration during vehicle travel and, accordingly, the driving stability of the vehicle is ensured with substantial reduction in vehicle weight.

In the foregoing, the fairing structure has been, described as covering substantially the entire power unit but may instead it may be formed to cover only a part of the power unit.

## Claims

1. A two wheeled motorcycle comprising a rearwheel drive power unit (P) located between the front and rear road wheels ($W_f$, $W_r$) of the motorcycle and a cowling structure (3), for the power unit, that is of thin sheet material and that is formed at the front with an air inlet opening (14), there being an air outlet opening (15) downstream of the inlet opening; characterised in that the air outlet opening (15) is in one side of the cowling structure (3), and in that a power-unit cooling device (R) is fitted to the cowling structure (3) in the air outlet opening (15).

2. A two wheeled motorcycle as claimed in claim 1, in which the cooling device comprises a radiator (R) having top and bottom water tanks (47, 48) and a plurality of flattened water tubes (49) extending between these water tanks in fluid communication therewith, the opposite flat side surfaces of the water tubes (49) extending parallel to a vertical plane inclined outwardly and rearward of the motorcycle.

3. A two wheeled motorcycle as claimed in claim 1 or 2, in which the cowling structure (3) has a head tube (1) fixedly mounted on the front end thereof, forms part of the vehicle frame (B) and exhibits a required strength with the side sections (3b) of the cowling structure firmly connected with each other through the intermediary of the power unit (P) interposed therebetween.

4. A two wheeled motorcycle as claimed in any one of claims 1 to 3, wherein there are two air outlet openings (15) one at each side the cowling structure (3).

5. A two wheeled motorcycle as claimed in claim 4, as appendant to claim 2 or claim 3, wherein there are two radiators (R) connected to the power unit (P) in parallel with each other.

6. A two wheeled motorcycle as claimed in claim 4 or 5, wherein an air-flow dividing guide plate (45) interconnects the side sections (3b) of the cowling structure (3) and defines in the cowling structure a bifurcated air passage duct extending between the air inlet opening (14) and the air outlet openings (15).

7. A two wheeled motorcycle as claimed in claim 6 as appendant to claim 5, in which the radiators (R) are located in respective leg portions of the bifurcated air passage duct.

## Revendications

1. Motocyclette à deux roues, comprenant un groupe de propulsion (P) par entraînement de la roue arrière intercalé entre les roues antérieure et postérieure ($W_f$, $W_r$) de la motocyclette en contact avec la chaussée, ainsi qu'un carénage ou capot (3) qui, équipant ledit groupe de propulsion, consiste en une tôle mince et est percé à l'avant d'un orifice (14) d'admission d'air, un orifice (15) de sortie de l'air se trouvant en aval dudit orifice d'admission; caractérisée par le fait que l'orifice (15) de sortie d'air est élaboré dans l'un des côtés du capot (3), et par le fait qu'un dispositif (R) de refroidissement dudit groupe de propulsion est ajusté sur ledit capot (3) dans ledit orifice (15) de sortie de l'air.

2. Motocyclette à deux roues selon la revendication 1, dans laquelle le dispositif de refroidissement consiste en un radiateur (R) comportant des réservoirs d'eau supérieur et inférieur (47, 48) ainsi que plusieurs tubes aplatis (49) de circulation d'eau s'étendant entre ces réservoirs d'eau avec lesquels ils sont en communication par fluide, les surfaces latérales planes opposées desdits tubes d'eau (49) s'étendant parallèlement à un plan vertical incliné vers l'extérieur et vers l'arrière de la motocyclette.

3. Motocyclette à deux roues selon la revendication 1 ou 2, dans laquelle le capot (3) possède un tube frontal (1) monté rigidement sur son extrémité antérieure, forme une partie du cadre (B) du véhicule et présente la robustesse nécessaire du fait que les tronçons latéraux (3b) du capot sont reliés rigidement l'un à l'autre par l'intermédiaire du groupe de propulsion (P) intercalé entre eux.

4. Motocyclette à deux roues selon l'une quelconque des revendications 1 à 3, dans laquelle sont prévus deux orifices (15) de sortie d'air élaborés chacun de chaque côté du capot (3).

5. Motocyclette à deux roues selon la revendication 4 considérée dépendante de la revendication 2 ou 3, dans laquelle deux radiateurs (R) sont reliés parallèlement l'un à l'autre au groupe de propulsion (P).

6. Motocyclette à deux roues selon la revendication 4 ou 5, dans laquelle un déflecteur (45) subdivisant le courant d'air relie entre eux les tronçons latéraux (3b) du capot (3) et délimite, dans ledit capot, un canal de passage de l'air présentant des bifurcations et s'étendant entre l'orifice (14) d'admission d'air et les orifices (15) de sortie de l'air.

7. Motocyclette à deux roues selon la revendication 5 considérée dépendante de la revendication 5, dans laquelle les radiateurs (R) sont disposés dans des branches respectives du canal fourchu de passage de l'air.

## Patentansprüche

1. Zweirädriges Motorrad mit einer Hinterrad-Antriebseinheit (P), die zwischen einem Vorderrad ($W_f$) und einem Hinterrad ($W_r$) des Motorrades angeordnet ist, und mit einem Haubenaufbau (3) für die Hinterrad-Antriebseinheit, der aus einem dünnen Blechmaterial besteht und an seiner Vorderseite mit einer Lufteinlaßöffnung (14) ausgebildet ist, wobei eine Luftauslaßöffnung (15) stromabwärts von der Lufteinlaßöffnung vorgesehen ist, dadurch gekennzeichnet, daß die Luftauslaßöffnung (15) auf einer Seite des Haubenaufbaus (3) vorgesehen ist und daß eine Antriebseinheit-Kühleinrichtung (R) an dem Haubenaufbau (3) in der Luftauslaßöffnung (15) befestigt ist.

2. Zweirädriges Motorrad nach Anspruch 1, dadurch gekennzeichnet, daß die Antriebseinheit-Kühleinrichtung aus einem Radiator (R) besteht, der einen oberen Wasserbehälter (47) und einen unteren Wasserbehälter (48) sowie eine Vielzahl von abgeflachten Wasserröhren (49), die sich zwischen diesen Wasserbehältern in Flüssigkeitsverbindung damit erstrecken, aufweist, wobei sich gegenüberstehende flache Seitenflächen der Wasserröhren (49) parallel zu einer vertikalen Ebene erstrecken, die nach außen und zum hinteren Ende des Motorrades hin geneigt ist.

3. Zweirädriges Motorrad nach Anspruch 1 oder 2, dadurch gekennzeichnet, daß der Haubenaufbau (3) ein Kopfrohr (1) hat, das fest an dem vorderen Ende des Haubenaufbaus angebracht ist, einen Teil eines Fahrzeugrahmens (B) bildet und eine erforderliche Festigkeit zusammen mit Seitenabschnitten (3b) des Haubenaufbaus aufweist, die fest miteinander durch die dazwischen angeordnete Hinterrad-Antriebseinheit (P) verbunden sind.

4. Zweirädriges Motorrad nach einem der Ansprüche 1 bis 3, dadurch gekennzeichnet, daß zwei Lutauslaßöffnungen (15), nämlich jeweils eine auf einer Seite des Haubenaufbaus (3), vorgesehen sind.

5. Zweirädriges Motorrad nach Anspruch 4 bei dessen Rückbeziehung auf Anspruch 2 oder 3, dadurch gekennzeichnet, daß zwei Radiatoren (R) vorgesehen sind, die parallel zueinander mit der Hinterrad-Antriebseinheit (P) verbunden sind.

6. Zweirädriges Motorrad nach Anspruch 4 oder 5, dadurch gekennzeichnet, daß ein Luftstromaufteilungs-Leitblech (45) vorgesehen ist, das die beiden Seitenabschnitts (3b) des Haubenaufbaus (3) miteinander verbindet und in dem Haubenaufbau einen sich gabelnden Luftströmungskanal definiert, der sich zwischen der Lufteinlaßöffnung (14) und den Luftauslaßöffnungen (15) erstreckt.

7. Zweirädriges Motorrad nach Anspruch 6 bei dessen Rückbeziehung auf Anspruch 5, dadurch gekennzeichnet, daß die Radiatoren (R) in betreffenden Schenkelabschnitten des sich gabelnden Luftströmungskanal angeordnet sind.

FIG. I

FIG. 2

FIG. 3

2

# FIG. 4

FIG. 5

FIG. 7

FIG. 6